(19) Europäisches Patentamt

European Patent Office

Office européen des brevets

(11) **EP 0 749 172 B1**

(12) **FASCICULE DE BREVET EUROPEEN**

| | |
|---|---|
| (45) Date de publication et mention de la délivrance du brevet:<br>**12.01.2000 Bulletin 2000/02** | (51) Int Cl.⁷: **H01M 10/34**, H01M 4/28,<br>H01M 4/32, H01M 4/52 |

(21) Numéro de dépôt: **96401260.3**

(22) Date de dépôt: **11.06.1996**

(54) **Accumulateur nickel-hydrogène**

Nickel-Wasserstoff Batterie

Nickel-hydrogen battery

(84) Etats contractants désignés:
**DE FR GB IT NL**

(30) Priorité: **13.06.1995 FR 9506986**

(43) Date de publication de la demande:
**18.12.1996 Bulletin 1996/51**

(73) Titulaire: **ALCATEL**
**75008 Paris (FR)**

(72) Inventeur: **Borthomieu, Yannick**
**86580 Vouneuil sous Biard (FR)**

(74) Mandataire: **Laroche, Danièle et al**
**COMPAGNIE FINANCIERE ALCATEL**
**Dépt. Propriété Industrielle,**
**30, avenue Kléber**
**75116 Paris (FR)**

(56) Documents cités:
**EP-A- 0 284 333**      **EP-A- 0 419 220**
**WO-A-90/02423**      **WO-A-94/11910**
**FR-A- 2 611 988**

## Description

La présente invention concerne un accumulateur nickel-hydrogène Ni-H$_2$, et plus particulièrement aux électrodes positives qu'il contient. Elle s'étend en outre au procédé de fabrication de l'électrode positive. Des batteries comportant ce type d'accumulateurs sont plus particulièrement utilisées dans le domaine spatial en raison de leur énergie massique élevée.

L'accumulateur nickel-hydrogène Ni-H$_2$ comporte une électrode positive contenant une matière active à base d'hydroxyde de nickel dérivée de celle utilisée dans l'accumulateur nickel-cadmium Ni-Cd. Des tels accumulateurs sont décrits dans les demandes européennes EP-A-419 220 et EP-A-284 333.

L'électrode positive classique de l'accumulateur Ni-Cd est constituée d'un collecteur de courant tridimensionnel, généralement un fritté de nickel, dans la porosité duquel est introduite la matière électrochimiquement active. La matière active est un hydroxyde composé majoritairement d'hydroxyde de nickel mais contenant également en plus faible proportion de l'hydroxyde de cobalt, de cadmium, etc... Ces hydroxydes sont coprécipités par imprégnation chimique (IC) du collecteur à partir d'une solution d'un de leurs sels. Pour améliorer le rendement de la matière active, celle-ci est ensuite recouverte d'une couche d'hydroxyde de cobalt, cette opération étant désignée par le terme "post-cobaltage".

L'électrode positive de l'accumulateur Ni-H$_2$ comporte généralement une matière active déposée par imprégnation électrochimique (IEC). Cette méthode confère à la matière active une capacité supérieure à celle obtenue par voie chimique (IC). Les tentatives pour améliorer encore le rendement de la matière active déposée par IEC en y ajoutant une opération de post-cobaltage n'ont pas abouti. En dépit d'une amélioration certaine de l'ordre de 20% au premier cycle, on observe dès les cycles suivants un retour aux performances de l'électrode exempte de post-cobaltage.

La présente invention concerne en particulier un accumulateur Ni-H$_2$ contenant des électrodes positives, de capacité améliorée par rapport aux électrodes connues, dont les performances restent stables pendant tout la durée d'utilisation de l'accumulateur.

L'objet de la présente invention est un accumulateur nickel-hydrogène Ni-H$_2$ comportant des électrodes négatives et des électrodes positives de type fritté comprenant un support tridimensionnel poreux dans la porosité duquel la matière électrochimiquement active, contenant majoritairement de l'hydroxyde de nickel, est déposée par voie électrochimique, caractérisé par le fait que ladite matière active est recouverte d'hydroxyde de cobalt postérieurement à l'imprégnation combiné au fait que le rapport de la capacité desdites électrodes positives à la capacité desdites électrodes négatives est compris entre 1,02 et 1,10.

On a constaté de manière surprenante que l'invention permet de conserver le gain en capacité obtenu par l'opération de post-cobaltage des électrodes positives pendant toute la durée d'utilisation de l'accumulateur selon l'invention. La caractéristique essentielle de la présente invention est la combinaison d'une électrode post-cobaltée, qui confère à l'accumulateur une capacité élevée, et d'un excédent de capacité positive qui permet de conserver ce gain de capacité dans le temps. En effet ce gain de capacité mesurable au premier cycle n'est conservé qu'à la condition que le rapport de la capacité des électrodes positives Cp à la capacité des électrodes négatives Cn soit légèrement supérieur à 1:

$$\frac{C_p}{C_n} = 1 + \varepsilon.$$

Ainsi l'électrode négative limite la durée de la décharge de l'accumulateur car la pression d'hydrogène dans l'accumulateur devient nulle. De cette manière, on empêche l'électrode positive de se décharger complètement et la tension de l'accumulateur reste supérieure à 0,7 Volt. L'excès de capacité positive est obtenu en limitant la présence d'hydrogène en fin de décharge.

Sans introduire de limitation à l'invention, on peut expliquer ce résultat surprenant par le fait qu'on évite ainsi la dégradation du dépôt chimique du revêtement de cobalt au cours du cyclage de l'accumulateur. Lors des étapes de décharge profonde, l'oxyhydroxyde de cobalt risquerait d'être réduit sous l'effet conjugué d'une pression élevée d'hydrogène et d'une tension basse. Cette dernière situation est celle qui correspond au cas d'un excédent de capacité négative, c'est à dire le cas où le rapport de la capacité des électrodes positives à la capacité des électrodes négatives est inférieur à 1.

Pour un fonctionnement équilibré des électrodes, il n'est pas souhaitable de s'écarter trop de la valeur de 1, donc on choisira de préférence la valeur minimum du rapport permettant d'assurer un résultat fiable. Dans le cas présent, compte tenu du cumul des incertitudes opératoires, cette valeur est de l'ordre de 1,02.

La présente invention a également pour objet un procédé de réalisation d'un accumulateur dans lequel le dépôt dudit hydroxyde de cobalt sur ladite matière active comprend les étapes suivantes:

- une première étape d'immersion de ladite électrode dans une solution d'un sel de cobalt suivie d'un séchage et d'un rinçage superficiel à l'eau de ladite électrode,
- une deuxième étape d'immersion de ladite électrode dans une solution de soude caustique suivie du lavage à l'eau et du séchage de ladite électrode.

Ledit sel de cobalt est choisi parmi l'acétate, le nitrate et le sulfate, de préférence on utilise l'acétate de cobalt.

La présente invention a également pour objet un procédé de réalisation d'un accumulateur comprenant les étapes suivantes précédant la fermeture dudit accumulateur:

- lesdites électrodes positives étant complètement déchargées, on effectue une charge partielle dudit l'accumulateur, par exemple une charge correspondant à 10% de la capacité de l'accumulateur, et
- on laisse échapper dudit l'accumulateur un volume d'hydrogène correspondant à la différence entre la capacité positive et la capacité négative, c'est à dire l'excédent positif souhaité, par exemple un volume équivalent à une pression d'1 bar d'hydrogène dans l'accumulateur.

L'invention sera mieux comprise et d'autres avantages et particularités apparaîtront à la lecture de l'exemple de réalisation qui va suivre, donnée bien entendu à titre illustratif et non limitatif, en référence au dessin annexé dans lequel:

- la figure 1 représente un accumulateur nickel-hydrogène selon l'invention, et
- la figure 2 est un détail de la partie I du faisceau électrochimique montrant l'empilement des électrodes,
- la figure 3 montre l'évolution de la tension et de la pression d'hydrogène au cours de la décharge à partir du troisième cycle pour un accumulateur de l'art antérieur,
- la figure 4 est analogue à la figure 3 pour un accumulateur selon l'invention.

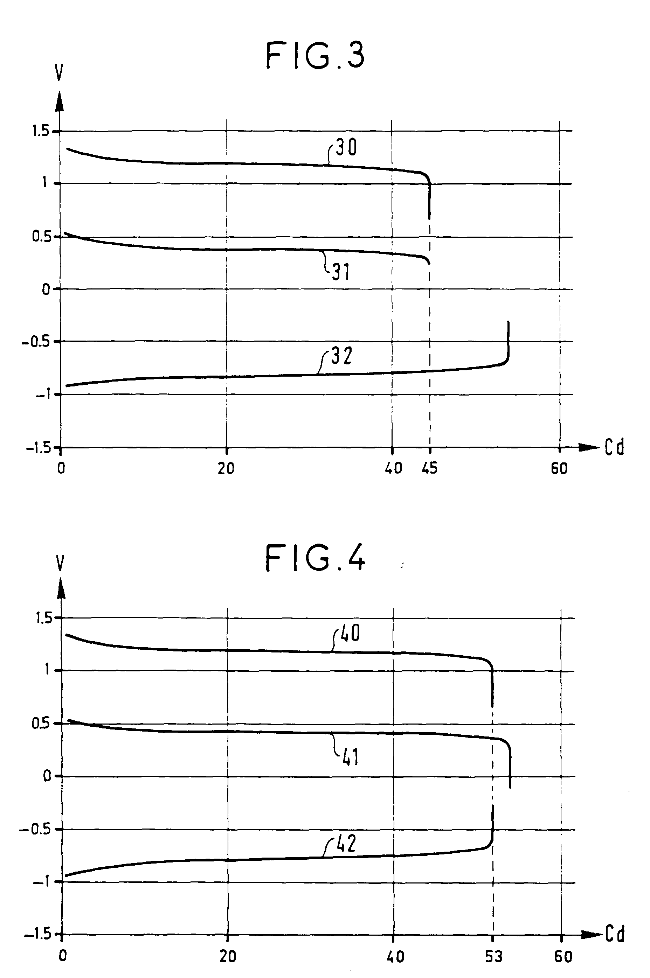

Sur les figures 3 et 4 la tension V en volts est donnée en ordonnée et en abscisse la capacité déchargée $C_d$ en ampères-heure.

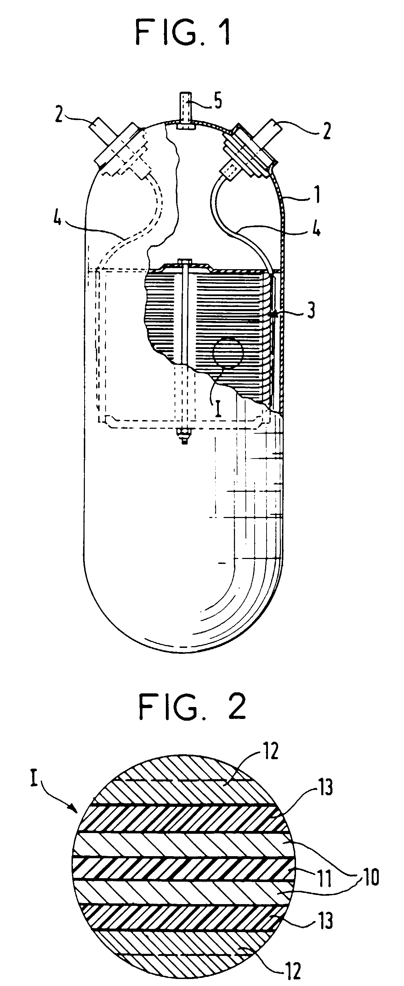

Un générateur électrochimique selon la présente invention est représenté sur la figure 1. Il comporte un conteneur 1 à extrémités hémisphèriques résistant à la pression et muni de deux bornes 2 de sortie du courant. Le faisceau électrochimique 3 se trouve placé à l'intérieur du conteneur, les électrodes de chaque polarité se trouvant reliés à leur borne 2 respective par des connexions 4. Un tube 5 permet l'introduction d'hydrogène et le remplissage en électrolyte de l'accumulateur avant sa fermeture. Sur la figure 2 est montré un détail de l'empilement des électrodes. Les électrodes négatives 10 sont associées dos à dos et séparée par un espaceur 11 permettant l'accès de l'hydrogène. Les électrodes négatives 10 et les électrodes positives 12 sont entourées d'un séparateur 13.

Le support poreux des électrodes positives se compose d'un feuillard perforé et nickelé sur lequel est fritté une poudre de nickel. La matière active constituée d'hydroxyde de nickel contenant environ 5% d'hydroxyde de cobalt est imprégnée électrochimiquement dans la porosité du support à raison d'environ $14g/dm^2$ d'électrode. Ensuite l'électrode est plongée dans une solution d'acétate de cobalt à 70g/l maintenue à 55°C pendant une durée de 7 minutes. Une dépression de 450mm de Hg est imposée à l'air situé au dessus de la solution. L'électrode est égouttée, rincée à l'eau désionisée, et séchée à 120°C pendant 20 minutes. Puis on immerge de nouveau l'électrode dans une solution de soude caustique à 250g/l maintenue à 40°C±2°C pendant une durée de 30mn±5mn. L'électrode est alors rincée à l'eau chaude (80°C) pendant 10 minutes puis séchée à 60°C pendant une nuit. Par ce procédé on a déposé entre $0,56g/dm^2$ et $0,74g/dm^2$ d'hydroxyde de cobalt.

Les électrodes fabriquées de la manière décrite précédemment sont utilisées pour réaliser l'accumulateur selon la présente invention représenté sur la figure 1. Après introduction de l'électrolyte KOH 7,3N, on introduit dans ledit accumulateur préalablement à sa fermeture une quantité d'hydrogène gazeux jusqu'à atteindre une pression telle que, en fin de décharge la pression d'hydrogène soit nulle et que les électrodes positives ne puissent être totalement déchargées conservant entre 2% et 10% de leur capacité initiale.

L'accumulateur est alors soumis à cinq cycles dans les conditions suivantes, où C est la capacité nominale de l'accumulateur qui vaut dans ce cas 51,8Ah:

|  | charge: | décharge: |
|---|---|---|
| cycle 1 | C/10 pendant 14 heures | C/5 jusqu'à 1 Volt |
| cycle 2 | C/10 pendant 14 heures | C/5 jusqu'à 1 Volt + C/10 jusqu'à 0,8 Volt |

(suite)

| | charge: | décharge: |
|---|---|---|
| cycle 3 | C/10 pendant 14,5 heures | C/2 jusqu'à 1 Volt + C/5 jusqu'à 0,8 Volt |
| cycle 4 | C/5 pendant 7 heures | C/2 jusqu'à 1 Volt + C/5 jusqu'à 0,8 Volt |
| cycle 5 | C/5 pendant 7 heures | C/2 jusqu'à 1 Volt + C/5 jusqu'à 0,8 Volt |

A titre de comparaison, un accumulateur analogue mais dans lequel le rapport de capacité des électrodes positives aux électrodes négatives est inférieur à 1, et comportant des électrodes positives fabriquées selon le procédé de l'art antérieur dans lequel on n'a pas déposé de cobalt a été cyclé dans les mêmes conditions.

La figure 3 montre la courbe de décharge de cet accumulateur. On voit que lorsque l'électrode positive (courbe 31) est complètement déchargée, la décharge de l'accumulateur (courbe 30) est terminée alors que l'électrode négative (courbe 32) possède encore de la capacité excédentaire disponible. A la fin de la décharge, la pression d'hydrogène est supérieure à 1 bar.

Dans la présente invention (figure 4), la décharge de l'accumulateur (courbe 40) est terminée lorsque l'électrode négative (courbe 42) est déchargée. La pression d'hydrogène est nulle. Une partie de la capacité de l'électrode positive (courbe 41) n'a pas été déchargée, c'est l'excédent de capacité positive.

Les valeurs des capacités déchargées (en Ah) mesurées à 1 Volt pour l'accumulateur selon l'invention et pour l'accumulateur de l'art antérieur sont rassemblées dans le tableau ci-dessous:

TABLEAU

| cycle | invention | art antérieur | gain % |
|---|---|---|---|
| 1 | 50,7 | | |
| 2 | 50,96 | 43,29 | 17,72 |
| 3 | 50,7 | 43,01 | 17,88 |
| 4 | 52,26 | 45,53 | 14,78 |
| 5 | 53,3 | 45,2 | 17,92 |
| 27 | 53,4 | 45,4 | 17,7 |

Ainsi la présente invention permet un gain de 18% sur la capacité déchargée de l'accumulateur par rapport à l'art antérieur, gain qui est conservé bien au-delà du premier cycle. L'énergie massique de l'accumulateur selon l'invention associée à ce gain est de 65 à 70Wh/Kg.

Bien entendu la présente invention n'est pas limitée au mode de réalisation décrit, mais elle est suceptible de nombreuses variantes accessibles à l'homme de l'art sans que l'on ne s'écarte de l'esprit de l'invention.

**Revendications**

1.  Accumulateur nickel-hydrogène comportant des électrodes négatives et des électrodes positives de type fritté comprenant un support tridimensionnel poreux dans la porosité duquel la matière électrochimiquement active, contenant majoritairement de l'hydroxyde de nickel, est déposée par voie électrochimique, caractérisé par le fait que ladite matière active est recouverte d'hydroxyde de cobalt postérieurement à l'imprégnation combiné au fait que le rapport de la capacité desdites électrodes positives à la capacité desdites électrodes négatives est compris entre 1,02 et 1,10.

2.  Procédé de réalisation d'un accumulateur selon la revendication 1, dans lequel le dépôt dudit hydroxyde de cobalt sur ladite matière active comprend les étapes suivantes:

    -   une première étape d'immersion de ladite électrode dans une solution d'un sel de cobalt suivie d'un séchage et d'un rinçage superficiel à l'eau de ladite électrode,
    -   une deuxième étape d'immersion de ladite électrode dans une solution de soude caustique suivie du lavage à l'eau et du séchage de ladite électrode.

**3.** Procédé selon la revendication 2, dans lequel ledit sel de cobalt est choisi parmi l'acétate, le nitrate et le sulfate.

**4.** Procédé de réalisation d'un accumulateur selon la revendication 1, comprenant les étapes suivantes précédant la fermeture dudit accumulateur:

- lesdites électrodes positives étant complètement déchargées, on effectue une charge partielle dudit l'accumulateur, et
- on laisse échapper dudit l'accumulateur un volume d'hydrogène correspondant à la différence entre la capacité positive et la capacité négative.

**Patentansprüche**

**1.** Nickel-Wasserstoff-Akkumulator, der mit negativen Elektroden und positiven Elektroden der gesinterten Art ausgestattet ist, die einen dreidimensionalen porösen Träger aufweisen, in dessen Porenraum das elektrochemisch aktive Material, welches überwiegend Nickelhydroxid enthält, auf dem elektrochemischen Weg abgeschieden wird, **dadurch gekennzeichnet, daß** das genannte aktive Material nach der Imprägnierung mit Kobalthydroxid überzogen wird, und daß das Verhältnis der Kapazität der genannten positiven Elektroden zur Kapapzität der genannten negativen Elektroden im Bereich zwischen 1,02 und 1,10 liegt.

**2.** Verfahren zur Herstellung eines Akkumulators nach Anspruch 1, bei welchem die Abscheidung des genannten Kobalthydroxids auf das genannte aktive Material die folgenden Schritte umfaßt:

- einen ersten Schritt, bei dem die genannte Elektrode in eine Lösung eines Kobaltsalzes eingetaucht, und diese dann getrocknet und mit Wasser oberflächlich abgespült wird,
- einen zweiten Schritt, bei dem die genannte Elektrode in eine Lösung von Natriumhydroxid eingetaucht, und diese dann mit Wasser gewaschen und getrocknet wird.

**3.** Verfahren nach Anspruch 2, bei welchem das genannte Kobaltsalz aus Acetat, Nitrat und Sulfat gewählt ist.

**4.** Verfahren zur Herstellung eines Akkumulators nach Anspruch 1, welches vor dem Verschließen des genannten Akkumulators die folgenden Schritte umfaßt:

- sind die genannten positiven Elektroden vollständig entladen, führt man eine Teilladung des genannten Akkumulators durch, und
- man läßt aus dem genannten Akkumulator ein Wasserstoffvolumen entweichen, das dem Unterschied zwischen der positiven Kapazität und der negativen Kapazität entspricht.

**Claims**

**1.** A nickel hydrogen storage cell including negative electrodes and positive electrodes of the sintered type each comprising a three-dimensional porous support in the pores of which electrochemically active material containing a majority of nickel hydroxide is deposited electrochemically, the cell being characterized by the fact that said active material is covered in cobalt hydroxide after impregnation, combined with the fact that the ratio of the capacity of said positive electrodes over the capacity of said negative electrodes lies in the range 1.02 to 1.10.

**2.** A method of making a storage cell according to claim 1, in which said cobalt hydroxide is deposited on the active material in a manner comprising the following steps:

- a first step in which said electrode is immersed in a solution of cobalt salt and then dried and surface-rinsed in water; and
- a second step in which said electrode is immersed in a solution of caustic soda and then washed in water and dried.

**3.** A method according to claim 2, in which said cobalt salt is selected from acetate, nitrate, and sulfate.

**4.** A method of making a storage cell according to claim 1, including the following steps, prior to closing said storage cell:

- with said positive electrodes being fully discharged, said storage cell is charged partially; and
- a volume of hydrogen corresponding to the difference between the positive capacity and the negative capacity is allowed to escape from said storage cell.

EP 0 749 172 B1

FIG. 1

FIG. 2

# FIG.3

# FIG.4

8